# EUROPEAN PATENT APPLICATION

(11) **EP 1 106 094 A1**
(43) Date of publication of application: **13.06.2001**
(21) Application number: 99830753.2
(22) Date of filing: 03.12.1999
(51) Int. Cl.: A43B 13/26, A43C 15/02, A43C 15/00, B29D 31/508, A45C 13/00

(54) **Method for making resin injections on semifinished leather products**

(71) Applicant: Vamas S.p.A., 56024 Molino D'Egola S. Miniato PI (IT)
(72) Inventor: Vagnoli, Fausto, 56024 Ponte a Egola S. Miniato (IT); Vagnoli, Ivano, 56024 Ponte a Egola S. Miniato PI (IT)
(74) Representative: Celestino, Marco

(57) **Abstract**

A method for making resin injections on semifinished leather products for making articles (10) such as shoes, bags, suitcases. The semifinished leather product (1,11) has a first face (2,12) on which at least a shallow recess (4,14) is executed predetermined shape (25) by milling the leather. Furthermore it has a second face (3,13) on which at least a enlarged recess (7,17) in correspondence of each shallow recess (4,14) of the first face (2,12). Every enlarged recess (7,17) has a hole (8,18) connecting with shallow recess (4, 14) and has a diameter larger than the hole. The semifinished product (1,11) after being put in the mould (21) receives an injection of plastic resin that fills the notch (25) of the mould (21), the shallow recess (4,14) and the enlarged recess (7,17). After solidification the portion of plastic resin that fills the recess (7,17) is an mechanical anchorage from the side of the second face (3,13) against the removal from the side of the first face (2,12) of the injection formed by the solidified plastic resin shape (25) and in the shallow recess (4,14).

## Description

### Field of the invention

The present invention relates the industry of leather and more precisely it relates to a method for making resin injections on semifinished leather products.

### Background of the invention

In the following description, the definition of leather comprises both soft skin that hard skin or leather as well as imitation skin or imitation leather.

In the industry of leather the application of resin injected onto semifinished products is common. For example, many soles of shoes are made in a composite manner using a flat leather body on which elements protruding from the sole are mounted, usually called "injections", by means of actual injection of molten plastics in a mould containing the leather body.

The injections have the function of contacting directly with the ground with dampening and anti-slippery effect, leaving furthermore to the feet enough transpiration through the sole of leather.

The shoe creators, furthermore, always look for new designs of the soles and change the shape and the layout of the injections. Therefore, the shoes are designed with injections made in many points of the sole so that the walking action is more effective and comfortable.

These injections have often the shape of either concentrated or distributed protrusions according to the zone of the sole on which they are arranged. Furthermore, according to the shoe design and type, the injections can protrude from the sole, like a small heel, or are substantially at the same level of the sole, with mainly anti-slippery function.

Resin injections are also applied to leather of bags, suitcases, etc., for example to provide support feet, or for stiffening belts or handles, making anti-slippery zones.

Normally, according to the prior art, in order to make easier the adhesion of the injections to leather, the latter is machined by milling away a small thickness of material making a recess several tenth of millimetre deep.

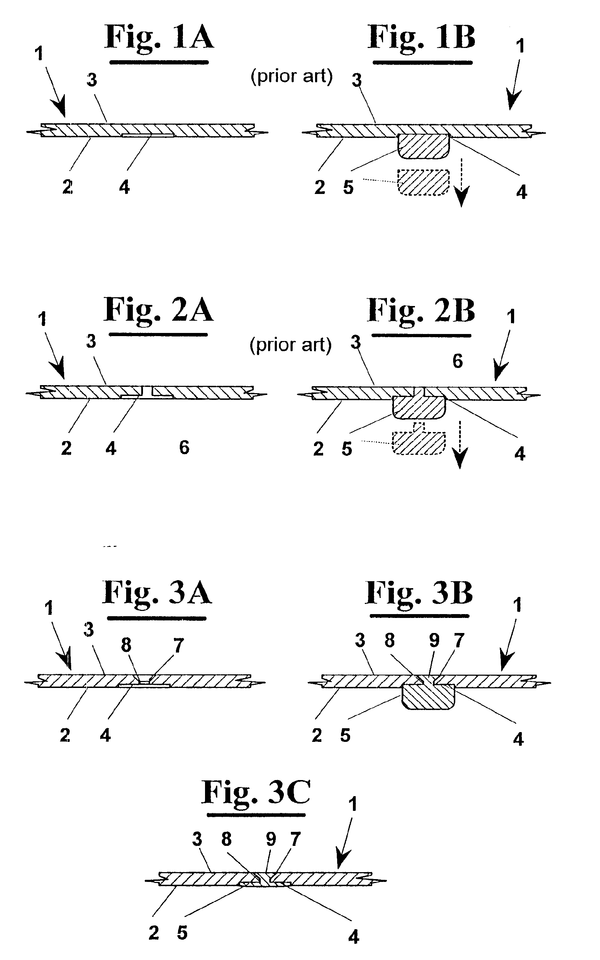

In figures 1A and 1B a semifinished leather product 1 is shown according to the prior art, for example a sole for shoes, having a first face 2 and a second face 3 on the side of the vamp. On first face 2 milling 4 is made. Then, leather 1 is put in a mould not shown and the molten resin is between the leather of first face 2 and the mould, shaped for example to form protrusion 5. If the mould is flat and has not a concavity, the resin fills only milling 4 and an injection is formed at the level of the sole.

At present at least two techniques are known for injecting the resin. In a first way, like in figures 1A and 1B, the resin in injected from the same side of milling 4, creating injection 5. In a second way, like in figures 2A and 2B, the resin is injected from the opposite side to milling 4, through a hole 6 made in leather that connects first face 2 and second face 3, creating injection 5.

In both cases, the resin of the injections 5 sticks to leather 1 for penetration of the resin and for the possible application preliminary on the milling 4 of glue, before entering the mould. However, eventually and with the wear, the resin 5 can separate from leather 1, and this causes a lower quality of the shoe, of the bag or suitcase.

### Summary of the invention

It is therefore object of the present invention to provide a method for making resin injections on semifinished leather products that allows to the injections same of being more firmly connected to the leather, in addition to the adhesion normally given after the plastic injection and with gluing.

It is another object of the present invention to provide a leather product such as a shoe, a bag, a suitcase, etc., or a semifinished product to manufacture this product, which has resin injections firmly fastened to the leather same.

These and other objects are achieved by the method according to the present invention, whose characteristic is that it comprises the steps of:
- preparing a semifinished leather product having a first face and a second face;
- making on the first face at least a shallow recess of predetermined shape by milling the leather;
- making in the second face at least an enlarged recess in correspondence of the or each shallow recess existing on the first face, the enlarged recess having a hole connecting with the shallow recess and having a diameter larger than said hole;
- introducing the semifinished product in a mould for injection of plastic resin, the mould having a notch for modelling the resin at the shallow recess;
- injecting the plastic resin in the mould, the resin filling the shape of the mould, the shallow recess and the enlarged recess,
- solidification of the plastic resin, whereby the portion of solidified resin that fills the enlarged recess is a mechanical anchorage from the side of the second face preventing the injection from being drawn away from the side of the first face, the injection being formed by the solidified plastic resin in the shape and in the shallow recess.

Preferably, the enlarged recess is a conical milling from the side of the second face. The milling that defines the enlarged recess is carried out by a tool having a shape chosen among: conical shape, cylindrical shape, conical shape plus cylindrical, cylindrical shape plus conical, conical shape with the concave sides, conical shape with the convex sides.

The plastic resin can be injected from the side of the first face, and in this case it reaches the enlarged recess through the hole connection, or it can be injected from the side of the second face, and in this case it fills first the enlarged recess and then reaches the shallow recess and the shape through the enlarged recess and the hole connection.

According to another physical aspect of the invention, a semifinished leather product, for making soles of shoes, bags, suitcases and similar leather products, has a first face and a second face, on the first face being executed at least a shallow recess for the housing of an injection of plastic resin, and in the second face at the or each shallow recess is executed at least a enlarged recess with the concavity facing towards second face. The recess is connected with the shallow recess through a connection hole and has larger dimension than said hole.

The shallow recess and the recess are filled by plastic resin solidified, forming a protrusion of predetermined shape from the side of the first face. This way, the resin filling the recess is a mechanical anchorage against the removal of the protrusion from the shallow recess at the side of the first face.

### Brief description of the drawings

Further characteristics and the advantages of the method according to the invention for making resin injections on semifinished leather products will be made clearer with the following description of an embodiment thereof, exemplifying but not limitative, with reference to the attached drawings, wherein:
- figures 1A and 1B show a cross sectional view of a portion of a first type of leather product respectively before and after the application according to the prior art of an injection of plastic resin;
- figures 2A and 2B show a cross sectional view of a portion of a second type of leather product respectively before and after the application according to the prior art of an injection of plastic resin;
- figures 3A and 3B show a cross sectional view of a portion of a leather product according to the invention respectively before and after the application of an injection of plastic resin;
- figure 3C shows the view of figure 3A after the application of an injection of plastic resin at the same level of the sole;
- figure 4 shows a shoe having a sole obtained from a semifinished leather product according to the present invention;
- figures 5, 6 and 7 show three successive manufacturing steps of a sole for shoes with the method according to the present invention;
- figures 8 and 9 show the first and second face of an exemplifying sole for shoes used according to the method of the invention to obtain a semifinished product according to the invention;
- figures from 10A to 10E show five possible embodiments of the enlarged recess made in the second face of sole leather, with the method according to the invention.

### Description of a preferred embodiment

With reference to figures 3A and 3B, a semifinished leather product 1 for making soles of shoes, bags, suitcases and similar leather products, has a first face 2 and a second face 3. On first face 2 a shallow housing is made 4 for the housing of an injection 5 in plastic resin.

On the second face, according to the invention, in correspondence of shallow housing 4 is executed a enlarged flared recess 7, with the concavity facing towards second face 3. Enlarged recess 7 is connected with shallow housing 4 through a connection hole 8.

Shallow housing 4 and enlarged recess 7 are filled by solidified plastic resin portions . A first portion models the protrusion 5 from the side of first face 2, whereas the resin 9 filling enlarged recess 7 is a mechanical anchorage against removal from the side of first face 2 of the protrusion 5 from shallow housing 4.

With reference to figure 3C, it is possible that the first injected portion 5 does not protrude from first face 2 and is at the same level of it, to give the shoe an anti chute effect known in the art, but with stronger anchorage by means of the resin 9 that fills enlarged recess 7.

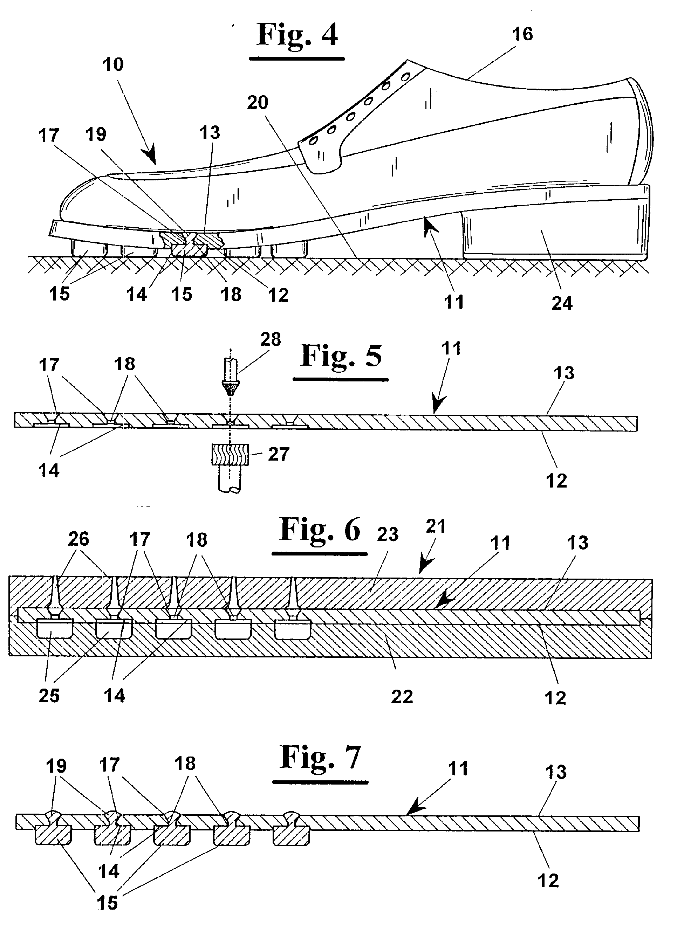

A leather product, for example a shoe 10, which has a sole 11 with the structure of semifinished product 1 of figure 3B according to the invention, is shown in figure 4. The shoe 10 has sole 11 with injections or protrusions 15 extending below for contacting the ground 20. Sole 11, as known in the art, is glued to the vamp 16 and to the heel 24.

The method according to the invention for making the resin injections 15 on sole 11 comprises the following steps.

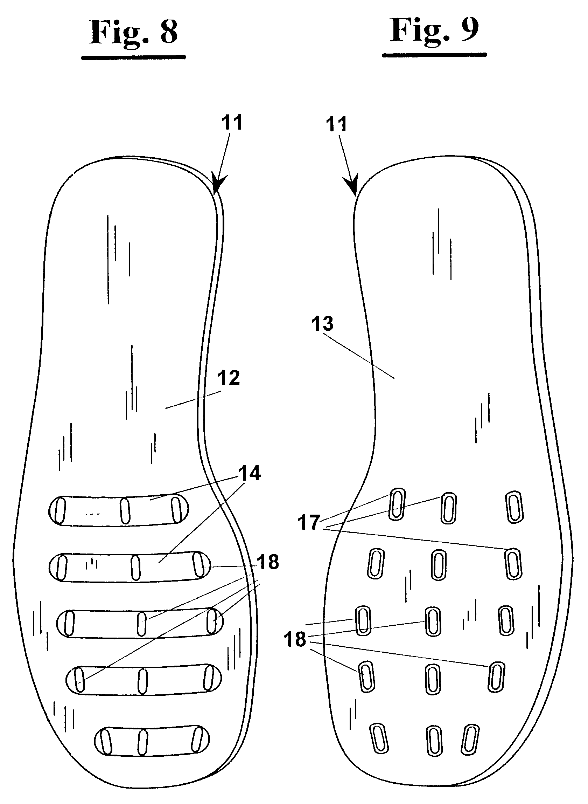

Leather sole 11 is previously cut with an appropriate shape, shown sectioned in figure 5 and from below or from the above in figures 8 or 9. Sole 11 has a first face 12, that in use is the lower face i.e. It faces towards ground 20 of figure 4, and to which is then glued heel 24. Furthermore, it has a second face 13 suitable for being glued to vamp 16.

On first face 12 shallow housings 14 are then executed, having a predetermined shape as a function of the final shape of the injections 15, by milling leather 11 by means of a tool 27 (fig. 5). In figure 9 are shown from the above the substantially elliptical shape of milling 14, whereas in figure 5 its thickness is shown.

By overturning sole 11, in its second face 13 flared enlarged recesses 17 are executed, in the present embodiment three for each shallow housing 14, having concavity on the side of second face 13. Each flared enlarged recess 17 has a connection hole 18 to the corresponding shallow recess 14. The layout of recesses 17 and of the corresponding holes is shown in figure 8, from the side of second face 13. Recesses 17 and holes 18 are also executed by milling leather 11 by means of a tool 28 (fig. 5).

With reference to figure 6, sole 11 is put into a mould 21, for injecting plastic resin, having two half-moulds 22 and 23. The half-mould 22 has a notch 25 for modelling resin 15 at shallow recess 14. Furthermore, the half-mould 23 has channels 26 for the injection of resin 15.

The resin is injected through channels 26 into mould 21, after its closure. This way the resin fills the notch 25 of the mould, shallow recess 14 and flared enlarged recess 17. In particular, for this type of mould the resin crosses grooves 26, first reaches flared enlarged recess 17, and then, through each hole 18, it reaches shallow recess 14 and notch 25 of half-mould 22.

Then, as shown in figure 7, the plastic resin solidifies so that the solidified resin portion 19 that fills the flared enlarged recess 17 is a mechanical anchorage from the side of the second face 12 preventing the solidified resin portion, formed in notch 25 and in shallow recess 14, from being drawn away from the side of first face 15.

The plastic resin can be injected from the side of the second face 12, as shown in figure 6, and in this case it reaches first the flared recess 17 and then, through connection hole 18, shallow recess 14 and notch 25.

Alternatively, in a way not shown, by overturning sole 11 with respect to the two half-moulds 22 and 23, the resin can be injected from the side of first face 12, and in this case reaches first notch 25 and shallow recess 14. Then, through connection hole 18 it reaches flared enlarged recess 17.

Flared enlarged recess 17 and hole 18 as above said are made by conical milling 28 (fig. 5), whereas flat milling 14 is executed by means of a tool 27 from the side of first face 12. The millings can be accomplished automatically or semi-automatically by means of electronically controlled milling machines and with CAM systems.

In particular, the method is suitable for obtaining a desired shape of injection and an optimisation program which can be easily arranged by a man of the art by automatically calculating the position of the conical milling 17 in the second face 13 as a function of the shape and of the layout of the flat and shallow millings 14.

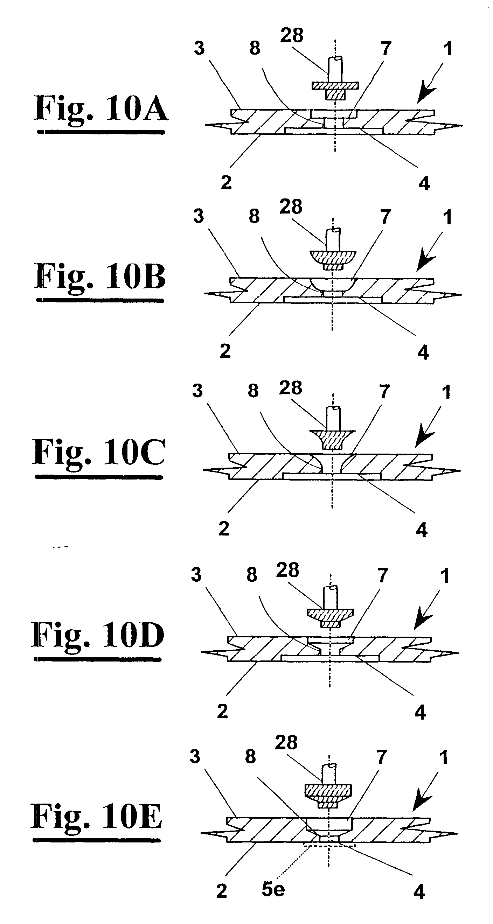

Besides the conical milling of figure 5, as shown respectively in figures from 10A to 10E other shapes of millings can be provided for making the enlarged recess: milling 7a can be done by a tool having a cylindrical shape, milling 7b by a conical shape with convex sides, milling 7c by conical shape with concave sides, milling 7d and 7e with cylindrical plus conical shape. In the example of figure 10E, the shallow recess from the side of first face 2 is not present, and in this case a small protrusion 5e in resin can be provided that protrudes directly from hole 8.

The plastic resin can be thermoplastic material, PVC, rubber.

The shape of the injections from the side of first face 2 or 12, with reference to the above figures, can be chosen according to the preferences of the designer. The sole, then, from below, appears with elliptical, circular, U-shaped, L-shaped, C-shaped, Z-shaped, trapezoidal, rectangular, triangular, etc. injections. Holes 8, 18 can be arranged according to the needs of production and optimisation of the injection as well as of the strength of the sole at shallow housings 4, 14.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for making resin injections on semifinished leather products **characterised in that** it comprises the steps of:
- providing a semifinished leather product (1, 11) having a first face (2, 12) and a second face (3, 13);
- making on said first face (2, 12) at least a shallow recess (4, 14) of predetermined shape (25) by milling said leather;
- making on said second face (3, 13) at least an enlarged recess (7, 17) corresponding to the or each shallow recess (4, 14) existing on the first face (2, 12), said at least enlarged recess (7, 17) having a hole (8, 18) communicating with said shallow recess (4, 14) and having a diameter larger than said hole;
- introducing said semifinished product (1, 11) in a mould (21) for injection of plastic resin thereon, said mould (21) having a notch (25) for modelling said resin at said shallow recess (4, 14);
- injecting plastic resin in said mould (21) that fills said notch (25) in said mould (21), said shallow recess (4, 14) and said enlarged recess (7, 17),
- solidification of said plastic resin whereby the portion of plastic resin that fills said enlarged recess (7, 17) is a mechanical anchorage from the side of said second face (3, 13) against the removal from the side of said first face (2, 12) of said injection formed by the solidified plastic resin in said notch (25) and in said shallow recess (4, 14).

2. Method according to claim 1, wherein said enlarged recess (7, 17) is executed by milling said second face (3, 13).

3. Method according to claim 1 wherein said milling that defines said enlarged recess (7, 17) is carried out with a tool (28) having a shape chosen among: conical shape, cylindrical shape, conical shape plus cylindrical, cylindrical shape plus conical, conical shape with concave sides, conical shape with convex sides.

4. Method according to claim 1 wherein said plastic resin is injected from the side of said first face (2, 12) and reaches said enlarged recess (7, 17) through said connection hole (8, 18).

5. Method according to claim 1, wherein said plastic resin is injected from the side of said second face (3, 13) and reaches said shallow recess (4, 14) and said notch (25) through said enlarged recess (7, 17) and said connection hole (8, 18).

6. Semifinished leather product (1, 11) for making soles for shoes (10), bags, suitcases and similar leather products, having a first face (2, 12) and a second face (3, 13), on said first face (2, 12) at least a shallow recess (4, 14) being executed for housing an injection (5, 15) in plastic resin, **characterised in that** on said second face (3, 13) in correspondence of said or each shallow recess (4, 14) at least aN enlarged recess (7, 17) is executed with the concavity facing towards said second face (3, 13), said enlarged recess(7, 17) being connected with said shallow recess (4, 14) through a connection hole (8, 18) and having larger dimension than said hole (8, 18), said shallow recess (4, 14) and said enlarged recess (7, 17) being filled by solidified plastic resin (5, 15, 9, 19) and forming from the side of said first face (2, 12) a protrusion (5, 15) of predetermined shape, the resin (9, 19) filling said recess (7, 17) acting as mechanical anchorage against the removal of said protrusion (5, 15) from said shallow recess (4, 14) at said first face (2, 12).

7. Leather product such as a shoe (10), a bag, a suitcase and the like characterised in that it is obtained from a semifinished product (1, 11) according to claim 6.
